Europäisches Patentamt

**(19)** European Patent Office

Office européen des brevets

**(11)** Publication number : **0 477 857 B1**

## EUROPEAN PATENT SPECIFICATION

**(45)** Date of publication of patent specification :
**22.12.93 Bulletin 93/51**

**(51)** Int. Cl.$^5$ : **H05G 1/08,** H01R 4/70, H02G 15/04

**(21)** Application number : **91116234.5**

**(22)** Date of filing : **24.09.91**

**(54)** X-ray generating apparatus and method of insulating X-ray generating apparatus.

**(30)** Priority : **26.09.90 JP 256397/90**

**(43)** Date of publication of application :
**01.04.92 Bulletin 92/14**

**(45)** Publication of the grant of the patent :
**22.12.93 Bulletin 93/51**

**(84)** Designated Contracting States :
**DE NL**

**(56)** References cited :
EP-A- 0 246 855
GB-A- 817 941
US-A- 4 163 599
US-A- 4 577 339
US-A- 4 824 390
US-A- 4 883 431
US-A- 4 943 685

**(73)** Proprietor : **Kabushiki Kaisha Toshiba
72, Horikawa-cho Saiwai-ku
Kawasaki-shi (JP)**

**(72)** Inventor : **Harada, Toyoshige
2-6-7, Housekidai, Takanezawa-Machi
Shioya-Gun, Tochigi-Ken (JP)**
Inventor : **Tanbo, Kenichi
1771-273, Shimoishigami
Otawara-Shi, Tochigi-Ken (JP)**

**(74)** Representative : **Blumbach Weser Bergen
Kramer Zwirner Hoffmann Patentanwälte
Radeckestrasse 43
D-81245 München (DE)**

EP 0 477 857 B1

## Description

The present invention relates to an X-ray generating apparatus and more particularly to an insulating arrangement for high voltage members of the X-ray generating apparatus, and also relates to a method of insulating the X-ray generating apparatus particularly for connecting portions between an X-ray tube and a high voltage generator and high voltage cable connecting them.

In an X-ray generating apparatus, for example, of a prior art, an X-ray tube and a high voltage generator and high voltage cable are electrically connected in such a manner as that an electrode supported by a bushing mounted to one end of a high voltage cable is inserted into a receptacle formed to a socket portion of the X-ray tube or high voltage generator. The connected portion is electrically insulated by insulating means for preventing flashover or sparkover between the electrode and other metallic portion such as cable fitting. As the insulating means, there has been proposed an application of an insulating oil into the socket portion into which the bushing including the electrodes is inserted.

In the above insulating method, however, since a liquid type insulating oil is utilized, such insulating means cannot be utilized except for a case wherein the socket portion of the X-ray generating apparatus is vertically arranged in the actual use. In cases except for this vertical arrangement, there is a fear of leaking of liquid insulating oil from the connected portion between the bushing of the high voltage cable and the socket.

In another insulating means, there has been proposed a case in which a silicone grease is coated or applied to the bushing including the electrode to achieve the insulating condition between the electrode and other metallic portion.

In this insulating means, however, there is a fear of fusing the silicone grease due to temperature increasing of the socket portion which is caused by the heat generation of a cathode portion of an X-ray tube due to the supply of a high voltage and flowing out the fused grease or generating air channels through which electric flashover is caused, resulting in degradation of insulating performance.

Such disadvantages of the conventional insulating means for the connecting portion between the X-ray tube and the high voltage generator and the high voltage cables connecting them hence result in degradation of the operation performance inclusive of stable insulating performance of the X-ray generating apparatus itself.

US-A-4 577 339 discloses an X-ray generating apparatus, wherein a space between terminal contacts of a high-voltage cable plug, which are connected to corresponding contacts of an X-ray tube, and an outer conductive shield is filled with insulating material such as polyurethane on silicone grease, so as to exclude all air between the contacts and the outer shield to avoid ionization breakdown.

SUMMARY OF THE INVENTION

Accordingly, it is an object of the present invention to substantially eliminate defects or drawbacks encountered in the prior art and to provide an X-ray generating apparatus including an improved insulation arrangement for the high voltage members capable of achieving and maintaining stable and high insulating performance and also to provide an insulation method for the X-ray generating apparatus.

This and other objects can be achieved according to the present invention, in one aspect, by providing an X-ray generating apparatus comprising a high voltage generator including an element for increasing highly a supply voltage, an X-ray tube generating an X-ray in accordance with a high voltage supplied from the high voltage generator, cable means connecting the high voltage generator and the X-ray tube for transferring the high voltage from the high voltage generator to the X-ray tube, first terminal means disposed on both ends of the cable means, second terminal means disposed on the high voltage generator and the X-ray tube and connected to the first terminal means for electrically connecting the high voltage generator and the X-ray tube, and a high voltage insulating means disposed on connection portions between the first and second terminal means, the high voltage insulating means comprising a gel-state material.

In a preferred embodiment, the gel-state material is first mounted to either one of the first and second terminal means and then developed so as to cover the connected portions between the first and second termial means when both are connected in a push-fitting manner.

In a preferred embodiment, each of the first terminal means comprises a plug connected to an end of the cable and an electrode mounted to the plug and each of the second terminal means comprises a socket member for receiving the plug with a space therebetween and an electrode mounting fitting provided for the socket member to be engaged with the electrode.

In another aspect of the present invention, there is provided a method of insulating an X-ray generating apparatus of the structure described above, in which a gel-state insulating material is first prepared, the gel-state material is then mounted to either one of the first and second terminal means and the first and second terminal means are connected in a push-fitting manner so as to cause the gel-state material to cover connected portions therebetween.

Thus, in the X-ray generating apparatus including an improved insulation arrangement of the characters described above, in one aspect, since in the connected portions between both the terminal members, i.e. high voltage members, there is provided a high voltage insulating material which initially may take a liquid state and then gelate with lapse of time, it is possible to provide a stable insulation for connected portions regardless of a disposition of the connected portions after the high voltage insulating material has gelated. Furthermore, since the high voltage insulating material is especially superior in heat resisting property as well as insulating property due to its gelation, the insulation reliability can be thus improved. In another aspect, the gel-state material is mounted to either one of the first and second terminal members and then both the terminal members are connected in a push-fitting manner so that the gel-state material is developed so as to cover the connection portions.

BRIEF DESCRIPTION OF THE DRAWINGS

For a better understanding of the present invention and to show how the same is carried out, reference is first made, by way of preferred embodiments, to the accompanying drawings, in which:

Fig. 1 is a general view illustrating an X-ray generating apparatus according to the present invention;

Fig. 2 is a sectional view, partially in section, of an X-ray tube of the X-ray generating apparatus shown in Fig. 1;

Figs. 3 to 6 are series of views for preparing a silicone gel to be utilized for the insulation arrangement of the X-ray generating apparatus according to the present invention, in which Figs. 3A and 3B are front views of containers in which silicone gel materials are contained, Fig. 4 is a perspective view showing a mixing state of the silicone gel materials contained in the containers shown in Figs. 3A and 3B, and Figs. 5 and 6 are views showing one method of removing air bubbles contained in the mixed silicone gel materials;

Fig. 7 is a brief front view showing a pouring state of the mixed silicone gel materials into a socket member of the X-ray tube;

Fig. 8 is a half front view of an X-ray tube according to a modified embodiment of the present invention; and

Fig. 9 is a half front view of an X-ray tube according to another embodiment of the present invention.

DESCRIPTION OF THE PREFERRED EMBODIMENTS

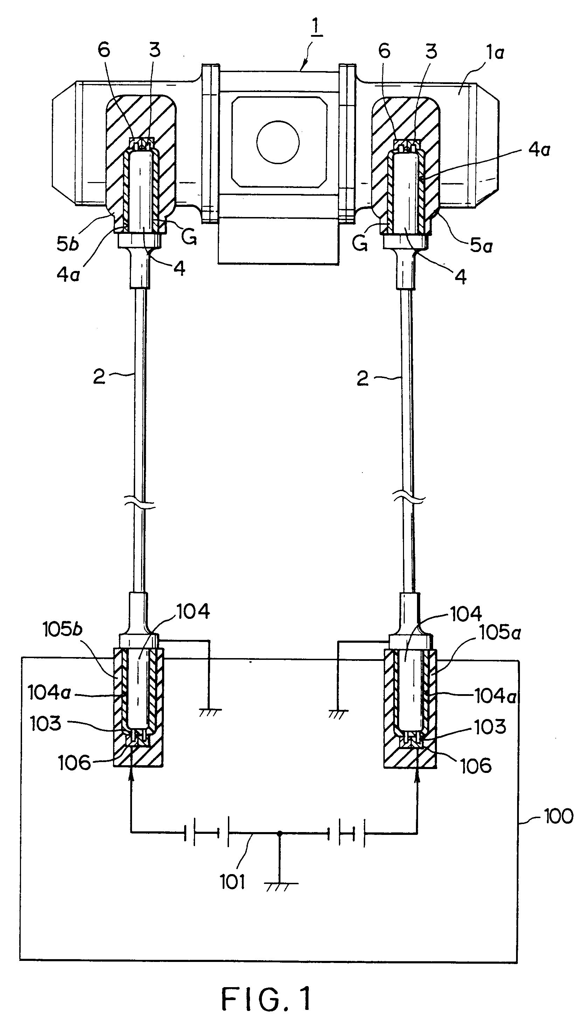

Fig. 1 shows a general view of an X-ray generating apparatus according to the present invention, which includes a high voltage generator 100 and an X-ray tube 1 in an operatively connected state by means of high voltage cables 2.

The high voltage generator 100 generally includes a high voltage supply means 101 and a socket member 105 (a pair of socket members 105a and 105b). The socket member 105 is provided with a plug mounting portion with a space 104a between an inner peripheral surface of the plug mounting portion of the socket member 105 and an inserted plug 104, and the voltage supply means 101 is connected to the socket members 105 in an electrically conductive manner so as to supply a voltage increased highly in its amount.

The X-ray tube 1 generally includes a body 1a and a socket member 5 (a pair of socket members 5a and 5b) embedded in the body 1a and the socket member 5 is provided with a plug mounting portion with a space 4a between an inner peripheral surface of the plug mounting portion and an inserted plug 4. Each of the high voltage cables 2 has two ends to which the plugs 4 and 104 are mounted. The plugs 4 and 104 are made of an insulating material. Electrodes 3 and 103 are mounted to the extreme ends of the plugs 4 and 104, respectively. Electrode mounting fittings 6 and 106 are provided for bottoms of the plug receiving portions.

In an actual connection of the high voltage generator 101 and the X-ray tube 1, the respective plugs 4 and 104 are inserted into the plug mounting portions with the spaces 4a and 104a, respectively, so that the electrodes 3 and 103 are fitted into the electrode receiving fittings 6 and 106. In this meaning, the plug mounting portions each has a diametrical size slightly larger than an outer diameter of the plug 4 or 104 with a space 4a or 104a of less than 1mm, for example. In this meaning, also, the plug 4 or 104 and the electrode 3 or 103 may be called a first terminal member and the socket member 5 or 105 may be called a second terminal member.

In order to prevent flashover between the electrode and other metallic members such as metallic members of the high voltage cable 2 and to accomplish an insulated condition, an insulating member is disposed between these members. Actually, according to the present invention, the space between the first and second terminal members is filled with an insulating material in the actual connected state as illustrated in Fig. 1.

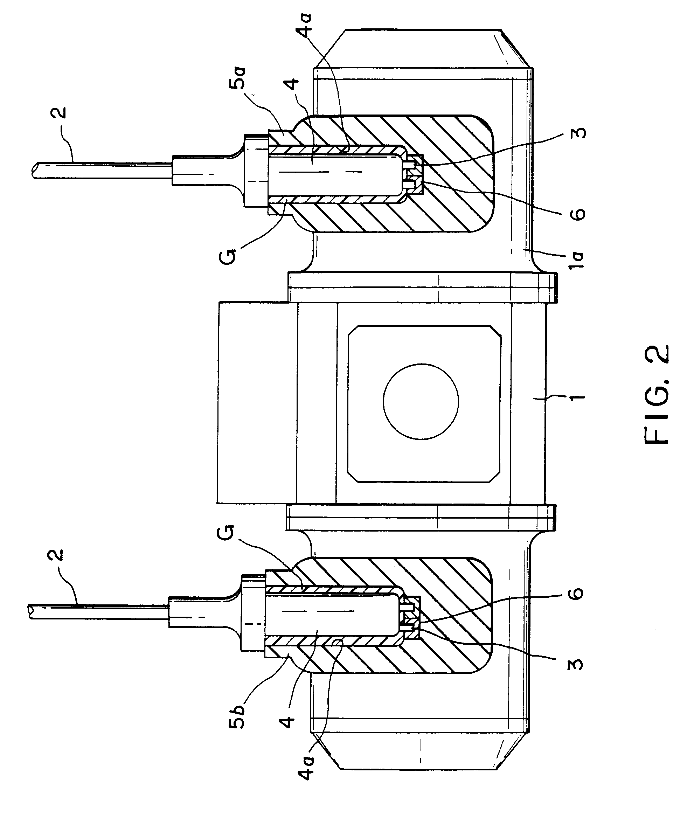

Namely, according to the present invention, the insulating member is formed in the following manner. For the sake of convenience, the disclosure will be made with reference to Fig. 2 which shows the X-ray tube 1.

In one preferred embodiment, there is provided the silicone gel G as the high voltage insulating material, which initially takes a liquid state and then gelates with lapse of time to fall into a semisolid state. By this silicone gel G, an insulation around a surrounding region of the electrodes 3 and the electrode receiving metal fittings 6 and along the metallic portions of the plugs 4 and 104 on the sides of the high voltage cables 2 is secured to prevent an electric flashover around this region.

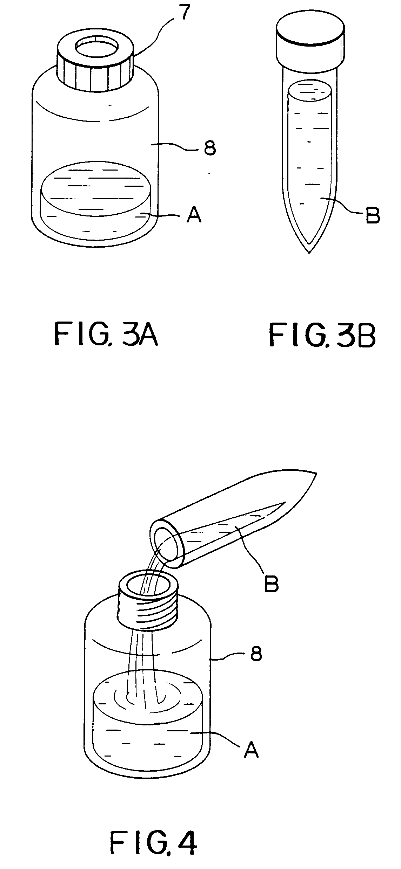

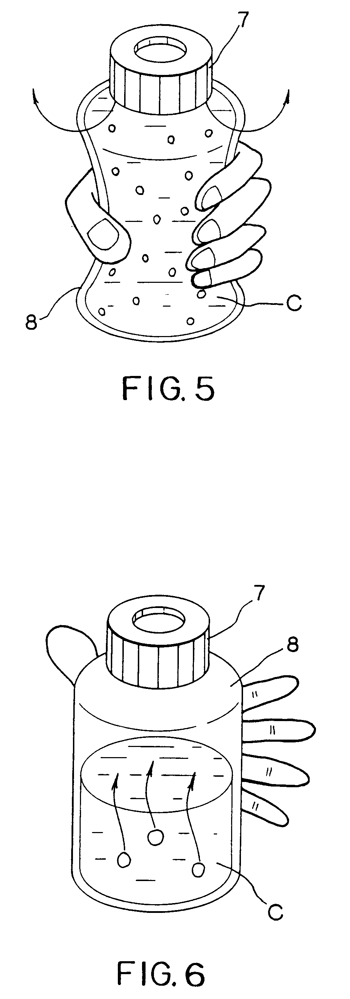

Processes for preparing the silicone gel G and pouring the same into the sockets 5a and 5b will be described hereunder with reference to Figs. 3 to 7.

First, first and second liquid materials A and B are prepared for the formation of a silicone gel by mixing them, being called first and second silicone gel materials A and B herein for the sake of convenience.

The first silcone gel material A of an amount of 10cc, for example, having an achromatic and transparent property (viscosity: 1000cp, temperature: 25°C, specific gravity: 0.97) which contains a silicone oil as a base and the second silicone gel material B of an amount of 10cc, for example, having achromatic and transparent property (viscosity: 800cp, temperature: 25°C, specific gravity: 0.97) are prepared in bottles or containers individually. The second, for example, silicon gel material B is then added to the first silicone gel material A in the bottle or container 8 having a flexible property. It is desired to utilize materials as the silicone gel materials A and B superior in thermal and electrical (dielectric strength) properties. The bottle or container is shaken for a predetermined time such as 1 min., for example, with a cap 7 being tightly fastened so as to mix both the silicon gel materials A and B and then is hand gripped with a cap 7 being loosened so as to substantially escape an air in the bottle 8 into atmosphere through the loosened cap 7. In such hand gripped state, the cap 7 is closed, and after that, the bottle 8 is set aside till the air bubbles contained in the mixed gel material C come up and substantially disapear therefrom. These series of processes are illustrated in Figs. 3 to 6. It is of course to be noted that the above mixing processes are ones for an example of mixing and bubble-removing processes and any other process can be adapted for this purpose.

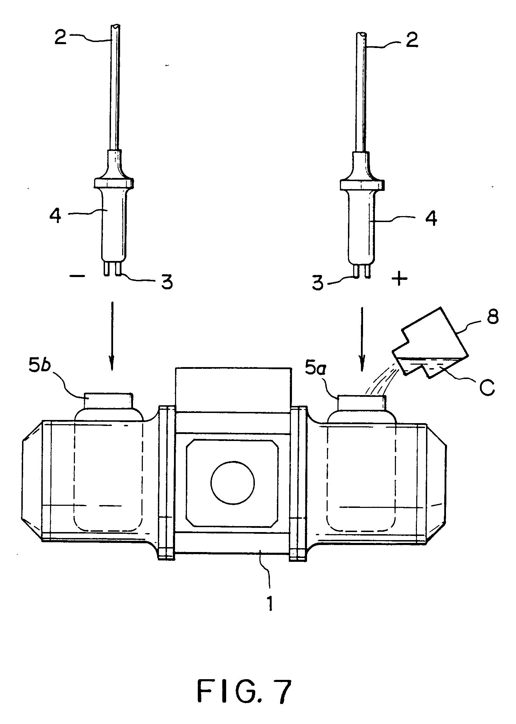

Then, as shown in Fig. 7, the thus prepared silicone gel material C of an amount of 20cc is poured into both of the sockets 5a and 5b as a high voltage insulating material and the first terminal members including the plugs 4 and the electrodes 3 mounted to the high voltage cables 2 are inserted into the sockets 5a and 5b respectively so that the electrodes 3 are fitted into the receiving metal fittings 6 of the second terminal members, respectively.

Then, by setting aside for several hours, for example, at a room temperature or for about 30 min. at a temperature of 80°C, the silicone gel material C gelates to change to the silicone gel G taking the semisolid state, so that the insulating arrangement for the high voltage member shown in Fig. 2 can be provided.

The mixing ratio of the silicone gel materials A and B is optional and according to the difference of the mixing ratio, the gelation time differs.

Some of physical properties of the silicone gel G is shown in the following table.

## Table

| | | |
|---|---|---|
| Volume Resistivity | $\Omega$ - cm | $1.5 \times 10^{15}$ |
| Dielectric Breakdown Strength | kV/mm | 40 |
| Thermal Conductivity | J/cm s °C (cal/cm s °C | $18,8 \times 10^{-4}$ $4.5 \times 10^{-4}$ ) |
| Coefficient of Thermal Expansion | cc/cc °C | 0.001 |

The silicone gel G of the characters described above is an agar-like high voltage insulating material which is cured in a low bridge-formation density by means of an addition reaction of both the silicone gel materials A and B, which are superior especially in thermal and electrical (dielectric strength) properties as shown in the table as well as improved adhesion and expansion properties.

Moreover, the silicone gel G is superior in heat resisting property and in cold resistance and further superior in safety and in sanitariness due to the property of the silicone material such as preferably organopolysiloxane. In this meaning, it may be desired to use the organopolysiloxane as the first silicone gel material A or material

4

of TSE 3063 (Trade Mark, Toshiba Silicone K.K.).

Furthermore, the silicone gel G has various characteristics such as good adhesiveness, low-elasticity and others described above and capability of absorbing stresses caused by thermal expansion and the like because of the low bridge-formation density as well as softness and deformability which facilitates its deformation by a small force.

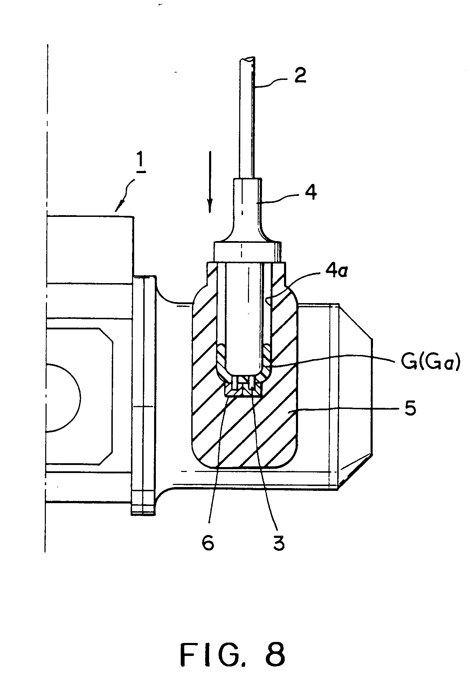

As shown in Fig. 2, in the bushing mounting state, it is desired that the silicone gel G fills the space 4a between the plug 4 (first terminal member) and the plug mounting portion of the socket 5 (second terminal member), but there is no limit to the amount of the silicone gel G for occupying the space, and for example, the amount such as shown in Fig. 8 may be adapted.

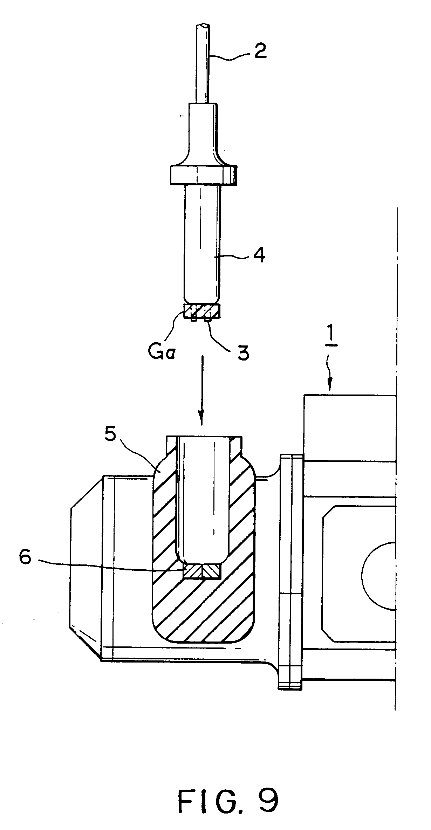

Fig. 9 shows another embodiment according to the present invention, which shows a half portion of the X-ray tube 1 for the sake of convenience of the explanation, in which like reference numerals are added to elements and portions corresponding to those shown in Fig. 8.

In the embodiment of Fig. 9, a gel-state material such as a silicone gel Ga is utilized instead of the silicone gel G of the former embodiment. The silicone gel Ga is mounted to the electrode 3 of the first terminal member. For this mounting, it is required for the silicone gel Ga to have a softness for an adhesive ability to the extent of not adversely affecting on its workability and not falling down by gravity, that is, the shape thereof is not deformed when the first terminal is arranged horizontally, and also to have a degree of penetration suitable for the penetration of the electrode.

When the cable 2 is forcibly fitted into the plug mounting portion from the state shown in Fig. 9, the silicone gel Ga is deformed due to its softness and fills the space 4a between the first and second terminal members in a state as shown in Fig. 8.

In the foregoings, the insulating arangement by the use of the insulating silicone gel G or Ga was described with reference to the X-ray tube 1, but it will be easily understood that substantially the same description is applied to the connecting portion of the first and second terminal members of the high voltage generator 100 of Fig. 1.

According to the characteristic features of the silicone gel G or Ga, in the case of the insulating connection arrangement for the high voltage member shown in Fig. 1, even in a case where the X-ray generating apparatus is used in the horizontally disposed state, the insulating material, i.e. the silicone gel, can be prevented from leaking, and hence, there is no limitation in its arrangment, thus achieving an improved insulating capability without causing any electrical flashover. In actual, it may be necessary to hold vertically the socket members till the silicone material is gelated, and in this connection an O-ring may be disposed to the base of the plug.

Futhermore, even when the X-ray tube 1 is exchanged, the socket 5 can be readily detached as well as the silicone gel G or Ga can be easily removed owing to the softness of the silicone gel of the gel state.

Incidentally, before the silicone gel material C changes to the gel state, the X-ray tube 1 may be used owing to the insulating property of the insulating material C.

## Claims

1. An X-ray generating apparatus comprising:

   a high voltage generator (100) including means (101) for increasing highly a supply voltage;

   an X-ray tube (1) for generating an X-ray in accordance with a high voltage supplied from said high voltage generator (100);

   cable means (2) connecting said high voltage generator (100) and said X-ray tube (1) for transferring the high voltage from the high voltage generator to the X-ray tube;

   first terminal means (4,104) disposed on both ends of said cable means (2);

   second terminal means (5,105) disposed on said high voltage generator and said X-ray tube and connected to said first terminal means (4,104) for electrically connecting said high voltage generator and said X-ray tube; and

   a high voltage insulating means (6) disposed on connection portions between said first and second terminal means (4,104;5,105), said high voltage insulating means comprising a gel state material.

2. An X-ray generating apparatus according to claim 1, wherein said gel-state material is a silicone gel prepared by mixing at least two kinds of materials for silicone gel.

3. An X-ray generating apparatus according to Claim 1, wherein said gel-state material is formed from a material which is deformed from a liquid state to the gel state with lapse of time.

4. An X-ray generating apparatus according to claim 3, wherein said gel-state material is first mounted to either one of said first and second terminal means (4,104;5,105) and then developed so as to cover the connection portions between said first and second terminal means when both are connected in a push-fiting manner.

5. An X-ray generating apparatus according to claim 4, wherein said gel-state material is a silicone gel.

6. An X-ray generating apparatus according to any of claims 1 to 5, wherein each of said first terminal means (4,104) comprises a plug connected to an end of said cable means (2) and an electrode (3,103) mounted to said plug and each of said second terminal means (5,105) comprises a socket member for receiving said plug with a space therebetween and an electrode mounting fitting (6,106) provided for the socket member to be engaged with said electrode (3,103).

7. A method of insulating an X-ray generating apparatus comprising a high voltage generator (100) including means (101) for increasing highly a supply voltage, an X-ray tube (1) for generating an X-ray in accordance with a high voltage supplied from said high voltage generator, cable means (2) connecting said high voltage generator (100) and said X-ray tube (1) for transferring the high voltage from the high voltage generator to the X-ray tube, first terminal means (4,104) disposed on both ends of said cable means (2) and second terminal means (5,105) disposed on said high voltage generator (100) and said X-ray tube (1) and connected to said first terminal means for electrically connecting said high voltage generator and said X-ray tube, said insulating method comprising the steps of:
preparing a gel-state insulating material (6);
mounting the gel-state material to either one of the first and second terminal means (4,104;5,105); and
connecting said first and second terminals in a push-fitting manner so as to cause the gel-state material to cover connection portions therebetween.

8. An insulating method according to claim 7, wherein each of said first terminal means (4,104) comprises a plug connected to an end of said cable means (2) and an electrode (3,103) mounted to said plug and each of said second terminal means (5,105) comprises a socket member for receiving said plug with a space therebetween and an electrode mounting fitting (6,106) provided for the socket member to be engaged with said electrode (3,103), said gel-state material being mounted to said electrode (3,103).

9. An insulating method according to claim 8, wherein said gel-state material has a degree of penetration suitable for a penetration mounting of said electrode (3,103).

## Patentansprüche

1. Vorrichtung zum Erzeugen von Röntgenstrahlen
mit einem Hochspannungsgenerator (100) einschließlich einer Einrichtung (101) zur Erzeugung einer hohen Versorgungsspannung,
mit einer Röntgenstrahlröhre (1) zur Erzeugung von Röntgenstrahlen im Einklang mit einer von dem Hochspannungsgenerator (100) gelieferten Hochspannung,
mit Kabeln (2), die den Hochspannungsgenerator (100) und die Röntgenstrahlröhre (1) verbinden, um die Hochspannung vom Hochspannungsgenerator zur Röntgenstrahlröhre zu übertragen,
mit ersten Anschlüssen (4, 104), die an beiden Seiten der Kabel (2) angebracht sind,
mit zweiten Anschlüssen (5, 105), die an dem Hochspannungsgenerator und der Röntgenstrahlröhre angebracht und mit den ersten Anschlüssen (4, 104) verbunden sind, um den Hochspannungsgenerator und die Röntgenstrahlröhre elektrisch zu verbinden und
mit einer Hochspannungsisolierung (G), die an Verbindungsteilen zwischen den ersten und zweiten Anschlüssen (4, 104; 5, 105) angebracht ist, wobei die Hochspannungsisolierung ein Material im Gelzustand ist.

2. Vorrichtung zum Erzeugen von Röntgenstrahlen nach Anspruch 1, bei der das Material im Gelzustand ein Silikongel ist, das unter Vermischen von mindestens zwei Arten von Materialien zu einem Silikongel zubereitet wird.

3. Vorrichtung zur Erzeugung von Röntgenstrahlen nach Anspruch 1, bei der das Material im Gelzustand aus einem Material gebildet wird, welches im Verlauf der Zeit aus einem flüssigen Zustand in den Gelzustand übergeht.

4. Vorrichtung zur Erzeugung von Röntgenstrahlen nach Anspruch 3, bei der das Material im Gelzustand zuerst auf einem der ersten oder zweiten Anschlüssen (4, 104; 5, 105) aufgebracht und dann so ausgedehnt wird, daß es die Verbindungsabschnitte zwischen dem ersten und zweiten Anschluß bedeckt, wenn beide in Form eines Gleitsitzes zusammengefügt werden.

5. Vorrichtung zur Erzeugung von Röntgenstrahlen nach Anspruch 4, bei der das Material im Gelzustand ein Silikongel ist.

6. Vorrichtung zur Erzeugung von Röntgenstrahlen nach einem der Ansprüche 1 bis 5, bei der jeder der ersten Anschlüsse (4, 104) einen mit einem Ende eines Kabels (2) verbundenen Stecker und eine an dem Stecker befestigte Elektrode (3, 103) aufweist, und bei der jeder der zweiten Anschlüsse (5, 105) ein Buchsenelement zur Aufnahme des Steckers mit einem zwischen der Buchse und dem Stecker liegenden Raum sowie ein für das Buchsenteil vorgesehenes Elektrodenbefestigungsanschlußstück (6, 106) aufweist, das mit der Elektrode (3, 103) in Verbindung steht.

7. Verfahren zur Isolierung einer Vorrichtung zur Erzeugung von Röntgenstrahlen
mit einem Hochspannungsgenerator (100) einschließlich einer Einrichtung (101) zur Erzeugung einer hohen Versorgungsspannung,
mit einer Röntgenstrahlröhre (1) zur Erzeugung einer Röntgenstrahlung im Einklang mit einer von dem Hochspannungsgenerator gelieferten Hochspannung,
mit Kabeln (2), die den Hochspannungsgenerator (100) und die Röntgenstrahlröhre (1) verbinden, um die Hochspannung von dem Hochspannungsgenerator zu der Röntgenstrahlröhre zu übertragen,
mit ersten an beiden Enden der Kabel (2) angebrachten Anschlüssen (4, 104) und
zweiten an dem Hochspannungsgenerator (100) und an der Röntgenstrahlröhre (1) angebrachten Anschlüssen (5, 105), die mit den ersten Anschlüssen verbunden sind, um den Hochspannungsgenerator und die Röntgenstrahlröhre elektrisch miteinander zu verbinden, wobei das Isolierverfahren folgende Schritte umfaßt:
Herstellen eines Isoliermaterials (G) im Gelzustand;
Aufbringen des Materials im Gelzustand auf einem der ersten oder zweiten Anschlüsse (4, 104; 5, 105) und
Verbinden der ersten und zweiten Anschlüsse in Form eines Gleitsitzes derart, daß das Material im Gelzustand veranlaßt wird, dazwischenliegende Verbindungsabschnitte zu bedekken.

8. Isolierverfahren nach Anspruch 7, bei dem jeder der ersten Anschlüsse (4, 104) einen mit einem Ende eines Kabels (2) verbundenen Stecker und eine an dem Stecker befestigte Elektrode (3, 103) aufweist, und bei dem jeder der zweiten Anschlüsse (5, 105) ein Buchsenelement zur Aufnahme des Stekkers mit einem zwischen der Buchse und dem Stecker liegenden Raum sowie ein für das Buchsenelement vorgesehenes Elektrodenbefestigungsanschlußstück (6, 106) aufweist, das mit der Elektrode (3, 103) in Verbindung steht, wobei das Material im Gelzustand auf die Elektrode (3, 103) aufgebracht wird.

9. Isolierverfahren nach Anspruch 8, bei dem das Material im Gelzustand einen Eindringungsgrad aufweist, der für eine Eindringungsbefestigung der Elektrode (3, 103) geeignet ist.


**Revendications**

1. Appareil générateur de rayons X, comprenant:
un générateur de haute tension (100) comportant un moyen (101) servant à augmenter fortement une tension d'alimentation;
un tube à rayons X (1) servant à produire un faisceau de rayons X en fonction d'une haute tension fournie par ledit générateur de haute tension (100);
un moyen formant un câble (2) qui relie ledit générateur de haute tension (100) et ledit tube à rayons X (1) afin de transférer la haute tension du générateur de haute tension au tube à rayons X;
des premiers moyens formant des bornes (4, 104), disposés sur les deux extrémités dudit moyen formant un câble (2);
des deuxièmes moyens formant des bornes (5, 105), disposés sur ledit générateur de haute tension et ledit tube à rayons X et connectés auxdits premiers moyens formant des bornes (4, 104) afin de connecter électriquement ledit générateur de haute tension et ledit tube à rayons X ; et

un moyen (6) d'isolation vis-à-vis de la haute tension, disposé sur des parties de connexion se trouvant entre lesdits premiers et deuxièmes moyens formant des bornes (4, 104; 5, 105), ledit moyen d'isolation vis-à-vis de la haute tension comprenant un matériau dans l'état de gel.

2. Appareil générateur de rayons X selon la revendication 1, où ledit matériau dans l'état de gel est un gel de silicone préparé par mélange d'au moins deux espèces de matériaux pour gel de silicone.

3. Appareil générateur de rayons X selon la revendication 1, où ledit matériau dans l'état de gel est formé à partir d'un matériau qui se déforme d'un état liquide à l'état de gel au fur et à mesure de l'écoulement du temps.

4. Appareil générateur de rayons X selon la revendication 3, où ledit matériau dans l'état de gel est d'abord monté sur lesdits premiers moyens formant des bornes (4, 104) ou bien sur lesdits deuxièmes moyens formant des bornes (5, 105), puis est développé de manière à couvrir les parties de connexion se trouvant entre lesdits premiers et deuxièmes moyens formant des bornes lorsque tous deux sont connectés d'une manière du type ajustage gras.

5. Appareil générateur de rayons X selon la revendication 4, où ledit matériau dans l'état de gel est un gel de silicone.

6. Appareil générateur de rayons X selon l'une quelconque des revendications 1 à 5, où chacun desdits premiers moyens formant des bornes (4, 104) comprend une fiche connectée à une extrémité dudit moyen formant un câble (2) et une électrode (3, 103) montés sur ladite fiche, et chacun desdits deuxièmes moyens formant des bornes (5, 105) comprend un élément du type douille destiné à recevoir ladite fiche en laissant entre eux un espace et une monture d'électrodes (6, 106) permettant de mettre l'élément du type douille en prise avec ladite électrode (3, 101).

7. Procédé d'isolation d'un appareil générateur de rayons X comprenant un générateur de haute tension (100) qui comporte un moyen (101) servant à augmenter fortement une tension d'alimentation, un tube à rayons X (1) servant à produire un faisceau de rayons X en fonction d'une haute tension fournie par ledit générateur de haute tension, un moyen formant un câble (2) qui connecte ledit générateur de haute tension (100) et ledit tube à rayons X (1) afin de transférer la haute tension du générateur de haute tension au tube à rayons X, des premiers moyens formant des bornes (4, 104) disposés sur les deux extrémités dudit moyen formant un câble (2) et des deuxièmes moyens formant des bornes (5, 105) disposés sur ledit générateur de haute tension (100) et ledit tube à rayons X (1) et connectés auxdits moyens formant des bornes afin de connecter électriquement ledit générateur de haute tension et ledit tube à rayons X, ledit procédé d'isolation comprenant les opérations suivantes:

préparer un matériau isolant (G) se trouvant dans l'état de gel;

monter sur les premiers moyens formant des bornes (4, 104) ou bien les deuxièmes moyens formant des bornes (5, 105) le matériau dans l'état de gel ; et

connecter lesdites premières et deuxièmes bornes d'une manière correspondant à un ajustage gras afin d'amener le matériau se trouvant dans l'état de gel à recouvrir les parties de connexion se trouvant entre elles.

8. Procédé d'isolation selon la revendication 7, où chacun desdits premiers moyens formant des bornes (4, 104) comprend une fiche connectée à une extrémité dudit moyen formant un câble (2) et une électrode (3, 103) montée sur ladite fiche, et chacun desdits deuxièmes moyens formant des bornes (5, 105) comprend un élément du type douille destiné à recevoir ladite fiche en laissant entre eux un espace et une monture d'électrode (6, 106) permettant que l'élément du type douille soit mis en prise avec ladite électrode (3, 103), ledit matériau dans l'état de gel étant monté sur ladite électrode (3, 103).

9. Procédé d'isolation selon la revendication 8, où ledit matériau dans l'état de gel possède un degré de pénétration convenant pour un montage à pénétration de ladite électrode (3, 103).

FIG. 1

FIG. 2

FIG. 3A          FIG. 3B

FIG. 4

FIG. 5

FIG. 6

FIG. 7

FIG. 8

FIG. 9